# EUROPEAN PATENT APPLICATION

(11) **EP 2 148 542 A1**
(43) Date of publication of application: **27.01.2010**
(21) Application number: 09009507.6
(22) Date of filing: 22.07.2009
(51) Int. Cl.: H04W 52/02

(54) **Method and apparatus for improving DRX functionality**

(30) Priority: 24.07.2008 US 83513 P
(71) Applicant: Innovative Sonic Limited, Road Town Tortola (VG)
(72) Inventor: Tseng, Li-Chih, Peitou, Taipei City (TW)
(74) Representative: Görz, Ingo

(57) **Abstract**

A method for improving a Discontinuous Reception, named DRX hereinafter, functionality in a user equipment, named UE hereinafter, of a wireless communication system is disclosed. The method includes steps of configuring a DRX functionality (402), and defining a first DRX inactivity timer for uplink transmission of the UE and a second DRX inactivity timer for downlink transmission of the UE, respectively (404).

## Description

The present invention relates to a method and apparatus for improving a Discontinuous Reception (DRX) functionality in a user equipment (UE) of a wireless communication system according to the pre-characterizing clauses of claims 1 and 8.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in Node B (NB) alone rather than in NB and RNC (Radio Network Controller) respectively, so that the system structure becomes simple.

In LTE system, Discontinuous Reception (DRX) functionality is applied to MAC layer for allowing a user equipment (UE) to enter a standby mode during certain periods of time and stopping monitoring a Physical Downlink Control Channel (PDCCH), so as to reduce power consumption of the UE.

According to related protocol specifications, the DRX functionality is configured by Radio Resource Control (RRC) layer, an upper layer of RLC layer. If the DRX functionality is configured, whenever a new DRX cycle begins, an On Duration Timer is started and the UE is awaked to monitor the PDCCH until the On Duration Timer expires. In addition, when a DRX Inactivity Timer or a DRX Retransmission Timer is running, the UE also monitors the PDCCH to acquire information about whether the network has assigned resources for uplink transmission or whether the network has downlink data for the UE to receive.

During the time when the UE monitors the PDCCH, if the PDCCH indicates the UE to receive or transmit a new transmission packet, the DRX Inactivity Timer is started or restrated for allowing the UE to continue monitoring the PDCCH, so as to prevent missing reception or transmission of following packets or to reduce data transmission delay.

On the other hand, if the PDCCH indicates the UE to receive a packet but the packet cannot be decoded successfully on a Downlink Share Channel (DL-SCH), the MAC layer of the UE would perform a Hybrid Automatic Repeat Request (HARQ) process to request a retransmission of the packet. Since the UE would not receive any retransmission packet during a signaling round trip time (RTT) of the HARQ process, a HARQ RTT Timer is thus configured by the DRX functionality to allow the UE to enter into the standby mode during this round trip time. So the power consumption of the UE can further be saved.

After the HARQ RTT Timer expires, the DRX Retransmission Timer is started by the DRX functionality to awake the UE to start monitoring the PDCCH for dectecting the retransmission packet of the HARQ process. In such a situation, if the retransmission packet of the HARQ process is successfully decoded, the DRX Retransmission Timer is stopped. Otherwise, the DRX Retransmission Timer is kept running until expiration, at which time the UE enters into the standby mode again.

Furthermore, a DRX Command is transmitted via a MAC Control Element by the network to stop the On Duration Timer and the DRX Inactivity Timer in some situations like that there are no follow-up data transmissions. Detailed description of the DRX functionality can be referred to the related protocol specifications, and is not given herein.

According to the aforementioned operation, the same DRX Inactivity Timer is utilized for both uplink transmission and downlink transmission of the UE. However, uplink and downlink services may be quite different, such as data transmission intervals for the uplink and downlink services are not the same. Thus, if only one DRX Inactivity Timer is defined, the system may not achieve the best scheduling efficiency.

This in mind, the present invention aims at providing a method and apparatus for improving a Discontinuous Reception (DRX) functionality in a user equipment (UE) of a wireless communication system, so as to enhance system scheduling efficiency.

This is achieved by a method and apparatus for improving a Discontinuous Reception (DRX) functionality in a user equipment (UE) of a wireless communication system according to the pre-characterizing clauses of claims 1 and 8. The dependent claims pertain to corresponding further developments and improvements.

As will be seen more clearly from the detailed description following below, the claimed method for improving a Discontinuous Reception (DRX) functionality in a user equipment (UE) of a wireless communication system includes steps of configuring the DRX functionality; and defining a first DRX inactivity timer and a second DRX inactivity timer for uplink and downlink transmission of the UE, respectively.

In the following, the invention is further illustrated by way of example, taking reference to the accompanying drawings. Thereof
FIG.1 is a schematic diagram of a wireless communications system.
FIG.2 is a function block diagram of a wireless communications device.
FIG.3 is a diagram of program code of FIG.2.
FIG.4 is a flowchart of a process according to an embodiment of the present invention.

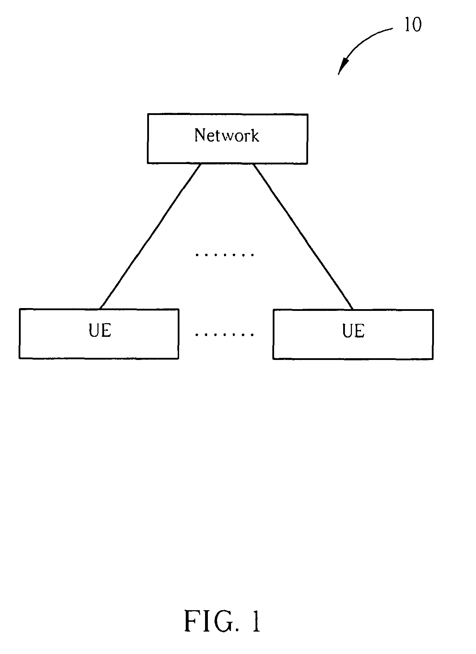

Please refer to FIG.1, which illustrates a schematic diagram of a wireless communications system 10. The wireless communications system 10 is preferred to be a Long Term Evolution (LTE) system, and is briefly composed of a network and a plurality of user equipments (UEs). In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

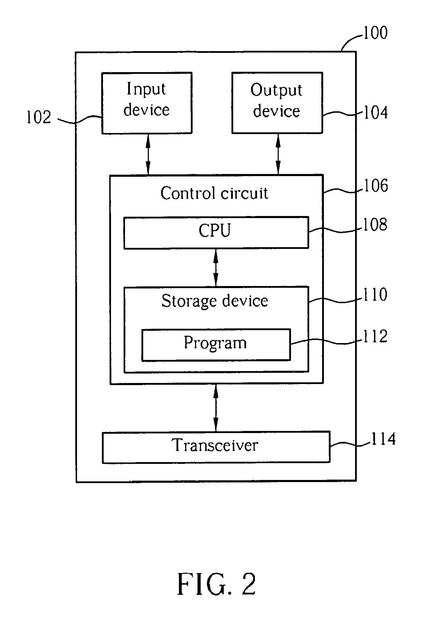

Please refer to FIG.2, which is a functional block diagram of a communications device 100 in a wireless communications system. The communications device 100 can be utilized for realizing the UEs in FIG .1, and the wireless communications system is preferably the LTE system. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

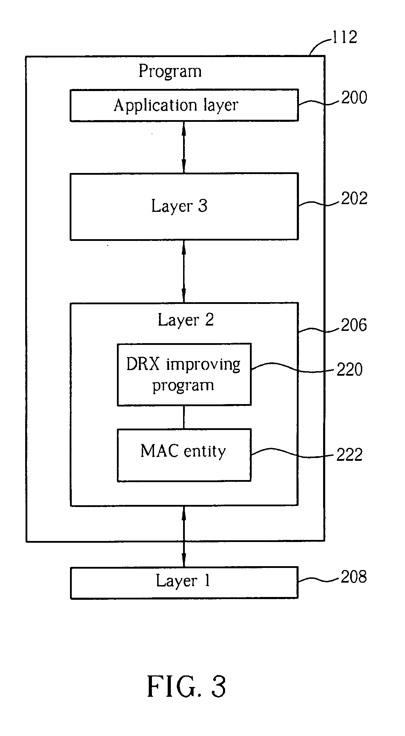

Please continue to refer to FIG.3. FIG.3 is a schematic diagram of the program 112 shown in FIG.2. The program 112 includes an application layer 200, a Layer 3 202, and a Layer 2 206, and is coupled to a Layer 1 208. The Layer 2 206 includes a Medium Access Control (MAC) entity 222 capable of simultaneously performing multiple Hybrid Automatic Repeat Request (HARQ) processes with a evolved Node-B (eNB) for packet reception and supporting discontinuous reception (DRX) functionality. When the DRX functionality is executed by the MAC entity 222 according to Radio Resource Control (RRC) commands of the Layer 3 202, an embodiment of the present invention provides a DRX improving program 220 in the program 112 to enhance system scheduling efficiency.

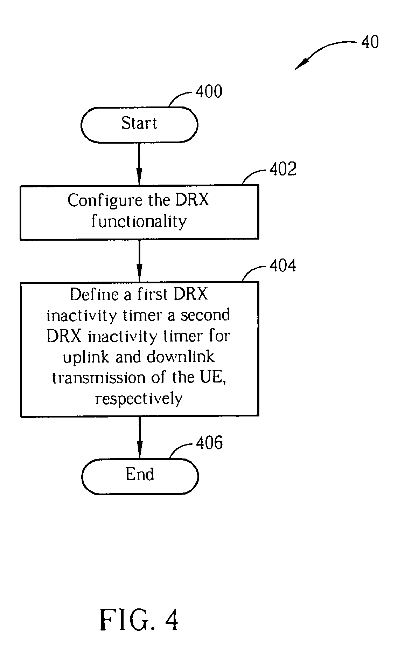

Please refer to FIG.4, which illustrates a schematic diagram of a process 40 according to an embodiment of the present invention. The process 40 is utilized for improving the DRX functionality in a UE of a wireless communication system and can be compiled into the DRX improving program 220. The process 40 includes the following steps:
Step 400: Start.
Step 402: Configure the DRX functionality.
Step 404: Define a first DRX inactivity timer a second DRX inactivity timer for uplink and downlink transmission of the UE, respectively.
Step 406: End.

According to the process 40, when the DRX functionality is configured, the embodiment of the present invention defines the first DRX inactivity timer and the second DRX inactivity timer for the uplink transmission and downlink transmission of the UE, respectively. Therefore, the first DRX inactivity timer and the second DRX inactivity timer can be set to different values according to different transmission features of the uplink and downlink services, so that scheduling flexibility and efficiency of the wireless communication system can be enhanced.

In this case, the first DRX inactivity timer is started or restarted when a Physical Downlink Control Channel (PDCCH) indicates the UE a new uplink transmission, and the second DRX inactivity timer is started or restarted when the PDCCH indicates the UE a new downlink transmission.

In addition, the embodiment of the present invention further defines a first DRX Command and a second DRX Command for the uplink transmission and the downlink transmission of the UE, respectively, to stop the On Duration Timer and the DRX Inactivity Timer in some situations like there are no follow-up data transmissions. However, the first DRX command and the second DRX command are each transmitted via a Medium Access Control (MAC) Control Element. Thus, in the embodiment of the present invention, the first DRX command and the second DRX command can be differentiated by reserved bits in a corresponding MAC sub-header.

Please note that the above embodiment is merely an exemplary illustration of the present invention and that any modifications made according to the spirit of the present invention also belong to the scope of the present invention. For example, in another embodiment of the present invention, multiple DRX inactivity timers can be defined for different transmission services such as VoIP services, FTP services and etc., or different logic channel groups, such that the system scheduling efficiency can also be increased. Besides, in the embodiment of the present invention, the second DRX inactivity timer can be set based on the first DRX inactivity timer, or the first DRX inactivity timer can be set based on the second DRX inactivity timer. Such variation also belongs to the scope of the present invention.

In summary, the embodiment of the present invention defines different DRX inactivity timers for the uplink transmission and downlink transmission of the UE, respectively, such that the DRX functionality can be improved to enhance system scheduling efficiency.

## Claims

1. A method for improving a Discontinuous Reception, named DRX hereinafter, functionality in a user equipment, named UE hereinafter, of a wireless communication system, the method comprising:
configuring the DRX functionality (402); and
**characterized by** defining a first DRX inactivity timer and a second DRX inactivity timer for uplink and downlink transmission of the UE, respectively (404).

2. The method of claim 1, **characterized in that** the first DRX inactivity timer is started or restarted when a Physical Downlink Control Channel, named PDCCH, indicates the UE a new uplink transmission.

3. The method of claim 1, **characterized in that** the second DRX inactivity timer is started or restarted when a Physical Downlink Control Channel, named PDCCH, indicates the UE a new downlink transmission.

4. The method of claim 1, **characterized in that** the second DRX inactivity timer is set based on the first DRX inactivity timer.

5. The method of claim 1, **characterized in that** the first DRX inactivity timer is set based on the second DRX inactivity timer.

6. The method of claim 1, **characterized in that** the method further comprises:
defining a first DRX command and a second DRX command for the uplink and downlink transmission of the UE, respectively, wherein the first DRX command and the second DRX command are utilized for stopping the first DRX inactivity timer and the second DRX inactivity timer, respectively.

7. The method of claim 6, **characterized in that** the first DRX command and the second DRX command are each transmitted via a Medium Access Control, named MAC hereinafter, Control Element, the first DRX command and the second DRX command being differentiated by reserved bits in a corresponding MAC sub-header.

8. A communication device (100) for improving a Discontinuous Reception, named DRX hereinafter, functionality in a user equipment, named UE hereinafter, of a wireless communication system, the communication device (100) comprising:
a processor (108) for executing a program (112); and
a memory (110) coupled to the processor (108) for storing the program (112); the program (112) comprising:
configuring the DRX functionality (402); and
**characterized by** defining a first DRX inactivity timer and a second DRX inactivity timer for uplink and downlink transmission of the UE, respectively (404).

9. The communication device (100) of claim 8, **characterized in that** the first DRX inactivity timer is started or restarted when a Physical Downlink Control Channel, named PDCCH, indicates the UE a new uplink transmission.

10. The communication device (100) of claim 8, **characterized in that** the second DRX inactivity timer is started or restarted when a Physical Downlink Control Channel, named PDCCH, indicates the UE a new downlink transmission.

11. The communication device (100) of claim 8, **characterized in that** the second DRX inactivity timer is set based on the first DRX inactivity timer.

12. The communication device (100) of claim 8, **characterized in that** the first DRX inactivity timer is set based on the second DRX inactivity timer.

13. The communication device (100) of claim 8, **characterized in that** the program (112) further comprises:
defining a first DRX command and a second DRX command for the uplink and downlink transmission of the UE, respectively, wherein the first DRX command and the second DRX command are utilized for stopping the first DRX inactivity timer and the second DRX inactivity timer, respectively.

14. The communication device (100) of claim 13, **characterized in that** the first DRX command and the second DRX command are each transmitted via a Medium Access Control, named MAC hereinafter, Control Element, the first DRX command and the second DRX command being differentiated by reserved bits in a corresponding MAC sub-header.
